Europäisches Patentamt

European Patent Office

Office européen des brevets

(11) Veröffentlichungsnummer: **0 572 900 A2**

## EUROPÄISCHE PATENTANMELDUNG

(21) Anmeldenummer: **93108407.3**

(22) Anmeldetag: **25.05.93**

(51) Int. Cl.⁵: **C09D  133/10**

(30) Priorität: **02.06.92 DE 4218106**

(43) Veröffentlichungstag der Anmeldung:
**08.12.93 Patentblatt  93/49**

(84) Benannte Vertragsstaaten:
**AT BE CH DE DK ES FR GB GR IT LI NL PT SE**

(71) Anmelder: **Herberts Gesellschaft mit beschränkter Haftung**
**Christbusch 25**
**D-42285 Wuppertal(DE)**

(72) Erfinder: **Bederke, Klaus, Dr.**
**Oststrasse 36**
**W-4322 Sprockhövel(DE)**
Erfinder: **Kerber, Hermann**
**Daniel-Schürmann-Weg 37**
**W-5600 Wuppertal 21(DE)**
Erfinder: **Ley, Olaf**
**Kaiserstrasse 180**
**W-5600 Wuppertal 11(DE)**
Erfinder: **Prescher, Michael, Dr.**
**Heinrich-Janssen-Strasse 22**
**W-5600 Wuppertal 2(DE)**
Erfinder: **Köchert-Mühlenbeck, Petra**
**Greuel 1**
**W-5600 Wuppertal 1(DE)**

(74) Vertreter: **Türk, Gille, Hrabal, Leifert**
**Brucknerstrasse 20**
**D-40593 Düsseldorf (DE)**

(54) **Überzugsmittel und dessen Verwendung bei Verfahren zur Herstellung von Mehrschichtenüberzügen.**

㉗ Überzugsmittel, enthaltend ein oder mehrere hydroxylgruppenhaltige (Meth)acryl-Copolymerisate, sowie ein oder mehrere Lösemittel und gegebenenfalls Wasser, Effektpigmente und/oder farbgebende Pigmente, Füllstoffe und/oder lackübliche Additive, wobei das (Meth)acryl-Copolymerisat im wesentlichen aus Einheiten auf der Basis folgender Monomerer aufgebaut ist:

a) 0.5 - 10.0 Gew.-% Amiden und/oder N-substituierten Amiden der Acrylsäure und/oder Methacrylsäure,

b) 5.0 - 30.0 Gew.-% Phenylalkylestern der Acrylsäure und/oder Methacrylsäure,

c) 10.0 - 30.0 Gew.-% Hydroxyalkylestern der Acrylsäure und/oder Methacrylsäure mit 2-8 C-Atomen im Hydroxyalkylrest,

d) 0.6 - 7.5 Gew.-% Acrylsäure und/oder Methacrylsäure, und

e) 30.0 - 83.9 Gew.-% Alkylestern der Acrylsäure und/oder Methacrylsäure mit 1-18 C-Atomen im Alkylrest, und

wobei die Summe der Komponenten a) bis e) jeweils 100 beträgt. Die Überzugsmittel sind besonders geeignet zur Herstellung von Basislackschichten in Mehrschichtlackierungen, insbesondere für die Serien- und Reparatur-lackierung auf dem Kraftfahrzeugsektor.

EP 0 572 900 A2

EP 0 572 900 A2

Die Erfindung betrifft ein Überzugsmittel, das insbesondere zur Erzeugung einer Basisschicht geeignet ist, die bei der Herstellung härtbarer Mehrschichtüberzüge Verwendung finden soll. Daraus hergestellte Überzüge weisen bei Überlackierung mit Klarlacken eine verbesserte Anlöseresistenz auf. Die Erfindung betrifft auch Verfahren zur Herstellung von Mehrschichtüberzügen unter Verwendung des erfindungsgemäßen Überzugsmittels, sowie die Verwendung des Überzugsmittels für diesen Zweck.

Überzugsmittel zur Herstellung von Überzügen mit Metallic-Effekt sind bekannt. In der EP-A 0 289 997 wird ein solches Überzugsmittel beschrieben. Es enthält Bindemittel auf der Basis von (Meth)acryl-Copolymerisaten aus (Meth)acrylamiden, Umsetzungsprodukten aus Glycidyl(meth)acrylat mit aromatischen Mono- oder Dicarbonsäuren, Hydroxyalkylestern der (Meth)acrylsäure und copolymerisierbaren $\alpha,\beta$-olefinisch ungesättigten Verbindungen.

Aufgabe der Erfindung ist die Bereitstellung von Überzugsmitteln, die besonders für Basisschichten in Mehrschichtlackierungen geeignet sind und bei der Überlackierung mit Klarlacken eine verbesserte Anlöseresistenz aufweisen.

Es hat sich gezeigt, daß diese Aufgabe gelöst werden kann, durch das einen Gegenstand der Erfindung darstellende Überzugsmittel, das ein oder mehrere hydroxylgruppenhaltige (Meth)acryl-Copolymerisate, gegebenenfalls niedrigviskoses Cellulose-Acetobutyrat, Vernetzungsmittel, ein oder mehrere Lösemittel, sowie gegebenenfalls Effektpigmente und/oder farbgebende Pigmente, Füllstoffe und/oder lackübliche Additive enthält und das dadurch gekennzeichnet ist, daß es als Bindemittel ein (Meth)acryl-Copolymerisat enthält, das im wesentlichen aus folgenden Monomeren aufgebaut ist:

a) 0,5 - 10,0 Gew.-% Amiden und/oder N-substituierten Amiden der Acrylsäure und/oder Methacrylsäure,
b) 5,0 - 30,0 Gew.-% Phenylalkylestern der Acrylsäure und/oder Methacrylsäure,
c) 10,0 - 30,0 Gew.-% Hydroxyalkylestern der Acrylsäure und/oder Methacrylsäure mit 2-8 C-Atomen im Hydroxyalkylrest,
d) 0,6 - 7,5 Gew.-% Acrylsäure und/oder Methacrylsäure, und
e) 30,0 - 83,9 Gew.-% Alkylestern der Acrylsäure oder Methacrylsäure mit 1-18 C-Atomen im Alkylrest, wobei die Summe der Komponenten a) bis e) jeweils 100 beträgt.

Die vorstehende Komponente a) ist in dem erfindungsgemäß eingesetzten (Meth)acryl-Copolymerisat bevorzugt in einer Menge von 0,5 bis 5,0 Gew.-% enthalten. Eine bevorzugte Menge der Komponente b) liegt bei 5 bis 15 Gew.-%. Die Menge der Komponente c) liegt bevorzugt bei 15 bis 23 Gew.-%; die Menge der Komponente d) liegt bevorzugt bei 1,2 bis 6.0 Gew.-% und die Menge der Komponente e) bevorzugt bei 50 bis 70 Gew.-%.

Es hat sich gezeigt, daß es mit dem erfindungsgemäßen Überzugsmittel möglich ist, mehrschichtige Überzüge durch Naß-in-Naß-Auftrag herzustellen, wobei insbesondere das Effektpigment enthaltende Überzugsmittel auf Substrate, die gegebenenfalls grundiert sind, aufgebracht werden kann und lediglich einer Überlackierung mit einem Klarlack bedarf. Das erfindungsgemäße Überzugsmittel kann mit einem hohen Verarbeitungsfestkörper appliziert werden, der in der Größenordnung von 20 bis 40 Gew.-% liegen kann. Hierdurch ergibt sich ein großer Vorteil im Hinblick auf die bisher benötigte Lösemittelmenge; die nach dem vorstehenden Stand der Technik eingesetzten Überzugsmittel konnten beispielsweise nur mit einem Festkörpergehalt von 9 - 16 Gew.-% appliziert werden. Es ergeben sich somit beträchtliche Vorteile der Einsparung der Lösemittel, sowie im Hinblick auf die damit einhergehende verringerte Umweltbelastung. Darüberhinaus können die erfindungsgemäßen Überzugsmittel auf wäßriger Basis formuliert werden, so daß organische Lösemittel zu einem großen Teil, beispielsweise bis zu 90 Gew.-%, durch Wasser ersetzt werden.

Es hat sich gezeigt, daß diese Vorteile durch die Zusammensetzung des hydroxylgruppenhaltigen (Meth)acryl-Copolymerisats in der erfindungsgemäßen Überzugsmittels erzielt werden.

Die Herstellung des in dem erfindungsgemäßen Überzugsmittel enthaltenen Copolymerisats kann durch Polymerisation nach üblichen Verfahren, z.B. der Substanz-, Lösungs- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, S. 24 - 255 (1961).

Das Lösungspolymerisationsverfahren wird für die Herstellung des erfindungsgemäßen eingesetzten Copolymerisats bevorzugt. Bei diesem Verfahren wird das Lösemittel in das Reaktionsgefäß verlegt, auf Siedetemperatur geheizt und das Monomeren/Initiatorgemisch kontinuierlich in einer bestimmten Zeit zudosiert.

Die Polymerisation wird beispielsweise bei Temperaturen zwischen 60°C und 160°C, vorzugsweise bei 80°C bis 140°C durchgeführt.

Die Polymerisationsreaktion kann mit bekannten Polymerisationsinitiatoren gestartet werden. Geeignete Initiatoren sind z.B. Per- und Azo-Verbindungen, die in einer Reaktion 1. Ordnung thermisch in Radikale zerfallen. Initiatorart und -menge werden so gewählt, daß bei der Polymerisationstemperatur während der

2

Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclo-hexyl-peroxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azo-bis(2,4-dimethylvaleronitril), 2,2'-Azo-bis(2-methylbutyronitril), 1,1'-Azo-bis-cyclohexancarbonitril, Azo-bis-isobutyronitril.

Es können bevorzugt die Polymerisationsinitiatoren, insbesondere die Perester in einer Menge von 0,2 bis 5 Gew.-% auf die Monomeren-Einwaage, eingesetzt werden.

Als organische Lösemittel, die zweckmäßigerweise bei der Lösungspolymerisation sowie später auch in den erfindungsgemäßen Überzugsmitteln eingesetzt werden, eignen sich beispielsweise: Glykolether, wie Ethylenglykoldimethylether; Glykoletherester, wie Butylglykolacetat, 3-Methoxy-n-butylacetat, Butyldiglykolacetat, Methoxypropylacetat; Ester, wie Butylacetat, Isobutylacetat, Amylacetat; Ketone wie Methylethylketon, Methylisobutylketon; Alkohole wie Ethanol, n-Propanol, iso-Propanol, n-Butanol, iso-Butanol, sek.-Butanol, tert.-Butanol, Hexanol, 2-Ethylhexanol; aromatische Kohlenwasserstoffe, wie Xylol, Solvesso 100 (eingetragenes Warenzeichen), sowie Gemische davon und aliphatische Kohlenwasserstoffe können ebenfalls im Verschnitt mit den obengenannten Lösemitteln eingesetzt werden.

Zur Regelung des Molekulargewichts können insbesondere bei der bevorzugten Lösungspolymerisation übliche Kettenüberträger mitverwendet werden. Beispiele sind Mercaptane, Thioglykolsäureester, Chlorkoh-lenwasserstoffe, Cumol, dimeres $\alpha$-Methylstyrol.

Die Polymerisationsbedingungen (Reaktionstemperatur, Zulaufzeit der Monomerenmischung, Lösungskonzentration) werden so gewählt, daß die erfindungsgemäß hergestellten (Meth)acryl-Copolymerisate ein Zahlenmittel des Molekulargewichts (bestimmt durch Gelpermeationschromatographie unter Verwendung von Polystyrol als Eichsubstanz) zwischen 5 000 und 30 000 aufweisen.

Die erfindungsgemäß hergestellten (Meth)acryl-Copolymerisate liegen in einem Glasübergangstemperatur-Bereich von -10°C bis +80°C, berechnet aus der in der Literatur angegebenen Glasübergangstemperatur der Homopolymerisate der einzelnen Monomeren (FOX-Gleichung, s. z.B. Polymere Werkstoffe, Batzer, 1985, Seite 307).

Der in der vorliegenden Beschreibung und den Patentansprüchen verwendete Ausdruck (Meth)acryl bedeutet Acryl und/oder Methacryl.

Als Monomerkomponente a) kommen beispielsweise die folgenden Verbindungen in Frage: Acrylamid, Methacrylamid und N-substituierte (Meth)acrylamide. Beispiele für N-substituierte (Meth)-acrylamide sind: N-Methyl-, N-Ethyl-, N-n-Propyl-, N-Isopropyl-, N-n-Butylacrylamid, N-tert.-Hexylacrylamid, N-tert.-Octylacrylamid, N-(1-Methylundecyl)acrylamid, N-Isobornylacrylamid, N-Benzylacrylamid, N-Norbornylacrylamid, N-(1,1,3-Trimethyl)butylacrylamid,N-Cyclohexylacrylamid, N-Methylmethacrylamid, N-(1,1-dimethyl-3-oxo-butyl)-acrylamid, N-tert.-Butyl-methacrylamid, N-Decylacrylamid, N-Cyclohexylmethacrylamid und/oder N-Benzylmethacrylamid, wobei N-tert.-Butylacrylamid und N-tert.-Butylmethacrylamid bevorzugt sind.

Als Beispiele für die Monomerkomponente b) kommen Phenylalkylacrylate und Phenylalkylmethacrylate in Frage: Phenylmethylacrylat, Phenylethylacrylat, 3-Phenyl-n-propylacrylat, 4-Phenyl-n-butylacrylat, 3-Phenyl-1-propylacrylat, 3-Phenyl-2-methyl-propylacrylat, Phenylethyloxyethylacrylat, Phenylmethylmethacrylat, Phenylethylmethacrylat, 3-Phenyl-n-propylmethacrylat, 4-Phenyl-n-butylmethacrylat, 3-Phenyl-1-propyl-methacrylat, 3-Phenyl-2-methyl-propylmethacrylat und/oder Phenylethyloxyethylmethacrylat, wobei 3-Phenylpropylmethacrylat bevorzugt eingesetzt wird.

Beispiele für die Monomerkomponente c) sind Hydroxyalkylester der Acrylsäure oder Methacrylsäure: $\beta$-Hydroxyethylacrylat, $\beta$-Hydroxyethylmethacrylat, $\beta$-Hydroxypropylacrylat, $\beta$-Hydroxypropylmethacrylat, Butandiol-1.4-monoacrylat, Butandiol-1.4-monomethacrylat, Hexandiol-1.6-monoacrylat und/oder Hexandiol-1.6-monomethacrylat. Es können auch, zumindest teilweise, Polyalkylenoxid-mono-(meth)-acrylate mit 2 bis 10 Alkylenoxid-Einheiten pro Molekül eingesetzt werden.

Ferner können Umsetzungsprodukte aus einem Mol Hydroxyalkyl-(meth)acrylat mit durchschnittlich zwei Mol $\epsilon$-Caprolacton verwendet werden.

Durch den Einsatz der Komponente c) werden Hydroxylgruppen in das Copolymerisat eingeführt. Die Menge der Komponente c) wird so gewählt, daß sich bevorzugt eine Hydroxylzahl von 50 bis 120 mg KOH/g und besonders bevorzugt von 70 bis 90 mg KOH/g ergibt.

Zur Ausstattung des (Meth)acryl-Copolymerisats mit Carboxyl-Gruppen werden Acrylsäure und/oder Methacrylsäure in derartigen Mengen einpolymerisiert, daß eine Säurezahl von 5 bis 50 mg KOH/g resultiert (Monomer-Komponente d)). Dabei liegt die Säurezahl für lösemittelhaltige Systeme bevorzugt bei 5 bis 30 mg KOH/g und für wasserhaltige Systeme bevorzugt bei 30 bis 50 mg KOH/g.

Als Alkyester der Acrylsäure oder Methacrylsäure (Monomer-Komponente e) werden beispielsweise eingesetzt: Methylacrylat, Methylmethacrylat, Ethylacrylat, Ethylmethacrylat, Iso-Propylmethacrylat, tert.-Butylacrylat, n-Butylacrylat, n-Butylmethacrylat, Iso-Butylacrylat, Iso-Butylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stearylacrylat, Stearylmethacrylat, Isobornylacrylat und/oder Isobornylmethacrylat.

Als Monomerkomponente e) können auch di- und polyfunktionelle (Meth)acrylate in einer Menge von 1 bis 10 Gew.-% mitverwendet werden. Durch Copolymerisation derartiger Monomerer mit monofunktionellen (Meth)acrylaten werden Polymerisate mit einem gewissen Verzweigungsgrad erhalten. Als Monomere mit zwei oder drei (Meth)acryloyl-Funktionen pro Mole kommen beispielsweise in Frage: Butandiol-1,4-di(meth)acrylat, Butandiol-1,3-di(meth)acrylat, Hexandiol-1,6-di(meth)acrylat, Dipropylenglykoldi(meth)acrylat, Ethylenglykoldi(meth)acrylat, Neopentylglykoldi(meth)acrylat, Tetraethylenglykoldi(meth)acrylat, Trimethylolpropantri-(meth)acrylat, Pentaerythrittri(meth)acrylat und/oder Pentaerythrittetra(meth)acrylat.

Die hier verwendeten Celluloseacetobutyrattypen sind insbesondere charakterisiert durch einen Butyrylgehalt von 25 bis 40 Gew.-%, vorzugsweise 28 bis 33 Gew.-% und einen Acetylgehalt von 10 bis 25 Gew.-%, vorzugsweise 16 bis 21 Gew.-%. Sie weisen in einer 20%igen Lösung in Aceton und Ethylalkohol (72:8) eine Viskosität von 18 bis 57 mPa.s, gemessen bei 25°C, auf (Formula A ASTM: Methode D 817).

Die erfindungsgemäßen Überzugsmittel können ohne Zusatz von Vernetzungsmitteln als selbsttrocknende Überzugsmittel formuliert werden. Sie sind dann insbesondere für Reparaturlackierungen geeignet, die keiner hohen Einbrenntemperaturen bedürfen.

Es ist jedoch auch möglich, die erfindungsgemäß verwendeten (Meth)acryl-Copolymerisate gegebenenfalls mit Vernetzungsmitteln wie Aminoplastharzen, freien oder blockierten Polyisocyanaten oder Prepolyisocyanaten zu kombinieren, insbesondere um duroplastische Basislackschichten herzustellen.

Zu geeigneten Aminoplastharzen zählen beispielsweise alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Formaldehyd und durch die Art des verwendeten Verätherungsalkohols. Das Mengenverhältnis erfindungsgemäß verwendetes (Meth)acryl-Copolymerisat zu Aminoplastharz beträgt 80:20 bis 60:40 (fest auf fest gerechnet).

Der Anteil an Polyisocyanat-Vernetzer wird so gewählt, daß auf eine auf eine Hydroxyl-Gruppe des (Meth)acryl-Copolymerisats 0.5 bis 1-5 Isocyanat-Gruppen entfallen. Überschüssige Isocyanat-Gruppen können durch Feuchtigkeit abreagieren und zur Vernetzung beitragen. Es können beispielsweise aliphatische, cycloaliphatische und aromatische Polyisocyanate verwendet werden wie, Hexamethylendiisocyanat, Trimethylhexamethylendiisocyanat, Isophorondiisocyanat, 4,4'-Diisocyanatodicyclohexylmethan, Toluylen-2,4-Diisocyanat, o-, m- und p-Xylylendiisocyanat, 4,4'-Diisocyanatodiphenylmethan; mit CH-, NH- oder OH-aciden Verbindungen verkappte Polyisocyanate; Biuret-, Allophanat-Urethan- und/oder Isocyanurat-Gruppen enthaltende Polyisocyanate.

Beispiele für derartige Polyisocyanate sind ein Biuret-Gruppen enthaltendes Umsetzungsprodukt aus 3 Molen Hexamethylendiisocyanat mit 1 Mol Wasser mit einem NCO-Gehalt von ca. 22% (entsprechend dem Handelsprodukt Desmodur N ® BAYER AG); ein Isocyanuratgruppen enthaltendes Polyisocyanat, das durch Trimerisierung von 3 Molen Hexamethylendiisocyanat hergestellt wird mit einem NCO-Gehalt von etwas 21,5% (entsprechend dem Handelsprodukt Desmodur N 3390 ® BAYER AG); oder Urethangruppen enthaltende Polyisocyanat, welche Reaktionsprodukte darstellen aus 3 Molen Toluylendiisocyanat und 1 Mol Trimethylolpropan mit einem NCO-Gehalt von etwa 17,5% (entsprechend dem Handelsprodukt Desmodur L ® BAYER AG). Bevorzugt eingesetzt werden Desmodur N ® und Desmodur N 3390 ®.

Die Basisschichten, welche das erfindungsgemäß einzusetzende (Meth)acryl-Copolymerisat enthalten, können neben den bereits genannten Lösemitteln zusätzlich lackübliche Additive, wie Hilfsstoffe enthalten, z.B. Verlaufmittel auf der Basis von (Meth)acryl-Homopolymerisaten, Silikonöle, Weichmacher, wie Phosphorsäure-, Phthalsäure- oder Zitronensäureester, Antiabsetzmittel, wie Montmorillonit, pyrogenes Siliziumoxid, hydriertes Ricinusöl; Netzmittel wie z.B. hochmolekulare Copolymere mit Aminogruppen (z.B. die Handelsprodukte Disperbyk 160 ® und 104 S) oder Polyamin-Polyester-Kondensationsprodukte (z.B. Solsperse 24000 ® ); Härtungsbeschleuniger für die Umsetzung des erfindungsgemäßen (Meth)acryl-Copolymerisats mit Aminoplastharzen oder Polyisocyanatharzen, Aminoplastharze als Mittel zur Verbesse-

4

rung des Anspritzverhaltens und der Pigmentbenetzung; Phosphorsäure, Phosphorsäureester, Dicarbonsäure-Halbester, Zitronensäure; organische Metallsalze, wie Dibutylzinndilaurat, Zink-Naphthenat, ferner tertiäre Aminogruppen enthaltende Verbindungen, wie Triethylamin.

Für die Herstellung der Basisschichten, die das erfindungsgemäße (Meth)acryl-Copolymerisat enthalten, können Pigmente und Füllstoffe verwendet werden. Es können lackübliche transparente oder deckende anorganische und/oder organische Farbpigmente eingesetzt werden. Zur Erzielung brillanter polychromatischer Metallic-Effekte werden Metallicpigmente, beispielsweise Aluminiumpigmente, z.B. solche, die aus hochreinem Aluminium (99,99%) hergestellt werden und/oder Perlglanzpigmente, gegebenenfalls mit transparenten anorganischen und/oder organischen Pigmenten eingesetzt.

Die erfindungsgemäßen Überzugsmittel weisen den Vorteil auf, daß sie zu Überzügen führen, die eine besonders gute Anlöseresistenz bei weiterem Auftrag von Klar- und Decklackschichten haben. Hierdurch wird ihre Einsatzmöglichkeit für die Erzielung von Metallic-Überzügen verbessert, da die Orientierung von Effektpigmenten, wie Metallic-Pigmenten, ausgezeichnet ist. Hierzu trägt auch die verbesserte Verträglichkeit der erfindungsgemäßen Überzugsmittel für Celluloseacetobutyrat (CAB) verschiedener Typen bei, das den Überzugsmitteln problemlos zugemischt werden kann.

Die erfindungsgemäßen Überzugsmittel sind besonders geeignet zur Erzeugung einer Basislackschicht bei der Herstellung lufttrocknender und ofentrocknender Mehrschichtüberzüge. Sie können auf Substrate, beispielsweise vorlackiert mit Grundmaterialien, wie Grundierungen und/oder Füller, aufgebracht werden. Sie eignen sich insbesondere für die Serien- und Reparaturlackierung von Kraftfahrzeugkarosserien und deren Teile. Sie weisen den Vorteil auf, daß sie mit einem hohen Verarbeitungsfestkörper appliziert werden können. Die Deckschicht oder Klarlackschicht, die aus üblichen Überzugsmitteln hergestellt werden kann, wie z.B. thermoplastische Aminoplast- oder Polyisocyanat-haltige Klarlacke, kann nach dem Naß-in-Naß-Verfahren, gegebenenfalls nach vorherigem Abdunsten, aufgetragen werden, worauf beide Schichten gemeinsam getrocknet oder gehärtet werden. Die Erfindung betrifft daher auch das Verfahren zur Herstellung eines Mehrschicht-Überzugsmittels bzw. die Verwendung der Überzugsmittel zur Herstellung von Basisschichten für raumtrocknende oder chemisch härtbare Mehrschichtüberzüge.

Die folgenden Beispiele dienen zur Erläuterung der Erfindung. Alle Teile beziehen sich auf das Gewicht.

**Beispiele 1 bis 5**

Herstellung der (Meth)acryl-Copolymerisate

In einen 2-Liter-Dreihals-Schliffkolben, der mit einem Rührwerk, Kontaktthermometer, Kugelkühler und Tropftrichter ausgerüstet ist, wird Pos. I (Mengenangaben sind der Tabelle 1 zu entnehmen) vorgelegt und unter Rühren bei eingeschalteter Rückflußkühlung auf 125°C geheizt. Innerhalb von 5 Stunden wird Pos. II (Monomerengemisch + Initiator) kontinuierlich aus dem Tropftrichter heraus zudosiert. Nach Zulaufende wird der Tropftrichter mit Pos. III nachgespült und zum Reaktionsgut hinzugefügt. Anschließend wird der Ansatz 3 Stunden bei 124 - 125°C bis zur vollständigen Umsetzung nachpolymerisiert.

**TABELLE 1**
(Einwaage in Gramm)

| Position | Bestandteil | Komponente | Beispiele: 1 | 2 | 3 | 4 | 5 |
|---|---|---|---|---|---|---|---|
| I | Butylacetat | | 400,0 | 400,0 | 400,0 | 400,0 | - |
| | Butylglykol | | - | - | - | - | 400,0 |
| II | N-tert.-Butylacrylamid | a) | 40,0 | 40,0 | 40,0 | 40,0 | 40,0 |
| | Phenylpropylmethacrylat | b) | 48,0 | 48,0 | 48,0 | 48,0 | 48,0 |
| | Hydroxyethylmethacrylat | c) | 52,0 | - | - | 48,0 | 48,0 |
| | Hydroxypropylacrylat | c) | 52,0 | 104,0 | 52,0 | 47,0 | 47,0 |
| | Hydroxypropylmethacrylat | c) | - | - | 59,0 | - | - |
| | Acrylsäure | d) | 5,5 | 5,5 | 5,5 | 5,0 | 26,0 |
| | Methylmethacrylat | e) | 171,0 | 171,0 | 168,0 | 145,0 | 145,0 |
| | Butylacrylat | e) | 178,0 | 178,0 | 174,0 | 140,0 | 146,0 |
| | Butandiol-1,4-diacrylat | e) | - | - | - | 20,0 | - |
| | Tert.-Butylperoxybenzoat | | 3,5 | 3,5 | 3,5 | 10,0 | 3,0 |
| III | n-Butanol | | 50,0 | 50,0 | 50,0 | 97,0 | - |
| | Butylglykol | | - | - | - | - | 97,0 |
| | | | 1000,0 | 1000,0 | 1000,0 | 1000,0 | 1000,0 |
| | Kennzahlen: | | | | | | |
| | Festkörper (%): | | 55,2 | 55,3 | 55,4 | 50,6 | 51,2 |
| | Viskosität (mPa.s b. 25°C): | | 1515 | 1100 | 1580 | 2020 | 1400 |
| | Säurezahl (bez. a. Festharz): | | 9,8 | 10,6 | 9,5 | 10,4 | 42,0 |

Die nach Beispiel 5 erhaltene Copolymerisat-Lösung wird bei 120°C durch Destillation im Vakuum auf ca. 75% aufkonzentriert und auf 60°C abgekühlt. Danach werden 55% der Carboxyl-Gruppen mit Dimethylethanolamin neutralisiert. Anschließend wird mit de-ionisiertem Wasser auf einen Festkörper von ca. 25% verdünnt. Es resultierte eine Dispersion mit einer Viskosität von 250 mPa.s bei 25°C.

Das in den folgenden Lackbeispielen verwendete CAB (Celluloseacetobutyrat) weist einen Gehalt an Butyryl von 31,2 Gew.-%, einen Gehalt an Acetyl von 18,5 Gew.-% und einen OH-Gehalt von 1,3 Gew.-% auf.

Herstellung von Basislacken

**Basislack-Beispiel 1 Metallic-silber**

Auf 24,5 Teile der erfindungsgemäßen Bindemittellösung nach Beispiel 1,2 und 3 werden 10 Teile einer Verdickerpaste gegeben, die hergestellt wird aus 42,7 Teilen der o. a. Bindemittellösung, in die 43,1 Teile einer 8,7%igen Montmorillonitpaste - aufgeschlossen in 5 Teilen Ethanol und 86,3 Teilen Xylol - und 2,6 Teile eines hochdispersen Siliciumdioxids eingerührt und nach der Dispergierung auf einer Perlmühle durch 8,3 Teile der o. a. Bindemittellösung und 3,3 Teilen Butylacetat ergänzt werden. Auf die Mischung werden noch 1,3 Teile eines handelsüblichen Netz- und Dispergiermittels auf Basis hochmolekularer Polycarbonsäure (Handelsprodukt Disperbyk 104 S), Silikonharz 50%ig in Xylol und 30 Teile einer 30%igen Lösung eines handelsüblichen niedrigviskosen CAB - gelöst in Butylacetat - gegeben.

In einem separaten Gefäß werden 6 Teile einer handelsüblichen Non leafing Aluminiumpaste vorgelegt, mit 7 Teilen Butylacetat aufgeschlossen und in die vorher beschriebene Mischung eingerührt. Zur Viskositätseinstellung werden 21,2 Teile Butylacetat zugegeben.

Nach dem Einstellen auf Spritzviskosität mit einem Gemisch aus Butylacetat, Testbenzin K21 und Xylol im Verhältnis 3:2:1 auf 22 S DIN 4 mm resultiert bei dem Metallic-silber Basislack ein Festkörper (1 h 130°C) von 20,3 %.

Testbenzin K 21 : aliphatische Kohenwasserstoffe (Siedebereich 130-170°C)

**Basislackbeispiel 2 Buntmetallic, blau**

80 Teile des im Basislackbeispiel 1 beschriebenen Metallic-silber Basislackes werden gemischt mit 20 Teilen eines blau pigmentierten Mischlackes, der hergestellt wird, indem 43,5 Teile einer der im Anspruch beschriebenen Bindemittellösung nach Beispiel 1, 2 oder 3 unter Rühren mit 47,4 Teilen einer Blaupigmentpaste gemischt werden, die besteht aus 5 Teilen eines handelsüblichen Phthalocyaninblau und 0,2 Teilen eines hochdispersen Siliciumdioxids, die zusammen eingerührt werden in eine Mischung aus 14,2 Teilen eines handelsüblichen, OH-gruppenhaltigen, aminharzvernetzbaren und CAB-verträglichen Polyacrylatharz, 55%ig gelöst in Xylol, 10 Teilen einer 15%igen Lösung eines handelsüblichen niedrigviskosen CAB, gelöst in Butylacetat, 3 Teilen einer 8,7%igen Montmorillonitpaste, die in 5 Teilen Ethanol und 86,3 Teilen Xylol aufgeschlossen wurde, und 1,2 Teilen eines handelsüblichen Netz- und Dispergiermittels auf Basis hochmolekularer Polycarbonsäure und Siliconharz 50%ig in Xylol. Nach intensivem Rühren wird diese Blaupigmentpaste mit 6,8 Teilen Butylacetat und 7 Teilen Butylglykolacetat verdünnt und auf einer Perlmühle auf eine Mahlfeinheit von < 10 μm dispergiert. Anschließend wird der Mischlack mit 9,1 Teilen Butylacetat und Xylol im Gemisch 1:1 auf Lagerviskosität eingestellt.

Nach dem Einstellen auf Spritzviskosität mit einem Gemisch aus Butylacetat, Testbenzin K21 und Xylol im Verhältnis 3:2:1 auf 22 S DIN 4 mm resultiert bei diesem blauen Metallic-Basislack ein Festkörper (1 h 130°C) von 21,4 %.

**Basislackbeispiel 3 Uni-2-Schicht weiß**

26,7 Teile einer der im Anspruch beschriebenen Bindemittellösung nach Beispiel 1, 2 oder 3 werden mit 2 Teilen Butylacetat verdünnt. Unter Rühren werden 69,3 Teile einer Weißpigmentpaste zugegeben, die hergestellt wird aus 19 Teilen Titandioxid und 0,25 Teilen hochdispersem Siliciumdioxid, die zusammen eingerührt werden in eine Mischung aus 14 Teilen eines handelsüblichen, OH-gruppenhaltigen, aminharzvernetzbaren und CAB-verträglichen Polyacrylatharz 55%ig gelöst in Xylol, 21,85 Teilen einer 15%igen Lösung eines handelsüblichen niedrigviskosen CAB, gelöst in Butylacetat, 3,8 Teilen einer 8,7%igen Montmorillonitpaste, die in 5 Teilen Ethanol und 86,3 Teilen Xylol aufgeschlossen wurde, und 1,2 Teilen eines handelsüblichen Netz- und Dispergiermittels auf Basis hochmolekularer Polycarbonsäure und Siliconharz 50%ig in Xylol. Nach intensivem Rühren wird diese Weißpaste mit 9,2 Teilen Butylglykolacetat verdünnt und auf einer Perlmühle auf eine Mahlfeinheit von < 12 μm dispergiert. Zur Einstellung der Viskosität werden 2 Teile Butylacetat zugegeben.

Nach dem Einstellen auf Spritzvisosität mit einem Gemisch aus Butylacetat, Testbenzin K21 und Xylol im Verhältnis 3:2:1 auf 22 S DIN 4 mm resultiert bei diesem weißen Uni-Basislack ein Festkörper (1h 130°C) von 30,2 %.

**Basislackbeispiel 4 mit Isocyanat vernetzt**

Auf ein Muster gemäß Basislackbeispiel 3 Uni-2-Schicht weiß werden 20% einer Lösung von 43,4 Teilen eines aliphatischen Polyisocyanat - 90%ig in Butylacetat/höhersiedendes Aromatengemisch 1:1 -, verdünnt in 56,44 Teilen eines Gemisches aus Butylacetat und Butylglykolacetat 1:1, und 0,16 Teile einer 10%igen Butylzinndilauratlösung in Xylol gelöst gegeben.

Nach Einstellen auf Spritzviskosität mit einem Gemisch aus Butylacetat, Testbenzin K21 und Xylol im Verhältnis 3:2:1 auf 2 S DIN 4 mm resultiert bei diesem weißen Uni-2-Schicht Basislack ein Festkörpergehalt (1 h 130°C) von 35,1 %.

**Basislackbeispiel 5 Silber mit reaktiver Komponente für Einbrennsysteme**

19,5 Teile einer der im Anspruch beschriebenen Bindemittellösung nach Beispiel 1,2 oder 3 werden mit 5 Teilen eines handelsüblichen, nichtplastifizierten, hochreaktiven Melamin-Formaldehydharz, 55%ig in Isobutanol/Xylol gelöst, gemischt. Auf diese Mischung werden 10 Teile einer Verdickerpaste gegeben, die hergestellt wird aus 42,7 Teilen der im Anspruch beschriebenen Bindemittellösung, in die 43,1 Teile einer 8,7%igen Montmorillonitpaste - aufgeschlossen in 5 Teilen Ethanol und 86,3 Teilen Xylol - und 2,6 Teile eines hochdispersen Siliciumdioxids eingerührt und die nach der Dispergierung auf einer Perlmühle durch 8,3 Teile der o. a. Bindemittellösung und 3,3 Teilen Butylacetat ergänzt werden. Auf diese Mischung werden noch 1,3 Teile eines handelsüblichen Netz- und Dispergiermittels auf Basis hochmolekularer Polycarbonsäure und Siliconharz 50%ig in Xylol und 30 Teile einer 30%igen Lösung eines handelsüblichen niedrigviskosen CAB - gelöst in Butylacetat - gegeben.

In einem separaten Gefäß werden 6 Teile einer handelsüblichen Non leafing Aluminiumpaste vorgelegt, mit 7 Teilen Butylacetat aufgeschlossen und in die vorher beschriebene Mischung eingerührt. Zur Viskositätseinstellung werden 21,2 Teile Butylacetat zugegeben.

Nach dem Einstellen auf Spritzviskosität mit einem Gemisch aus Butylacetat, Testbenzin K21 und Xylol im Verhältnis 3:2:1 auf 22 S DIN 4 mm resultiert bei diesem Metallic-silber Basislack ein Festkörper (1 h 130°C) von 20,1 %.

**Lackieraufbau der Broncelackbeispiele mit einem Zweikomponenten-Klarlack (Polyisocyanat vernetzt)**

Auf einen geprimerten/gefüllerten oder mit Altlackierung versehenen Untergrund wird in einer Schichtdicke von 40-60μm ein Füller, vorzugsweise ein Zweikomponenten Polyurethanfüller aufgespritzt. Nach Trocknen und Anschleifen werden die Metallic-Basislacke in einer Schichtdicke von 15-25 μm (Basislackbeispiele Nr. 1, 2, 4, 5) bzw. der Uni-Basislack in einer Schichtdicke von 30-45 μm (Basislackbeispiel Nr. 3) im Spritzverfahren mit einem Spritzdruck von 4-5 bar aufgetragen. Nach einer Ablüftzeit von 10-20 min. wird für die Basislackbeispiele 1-4 eine transparente Deckschicht eines Polyurethanlackes auf Basis eines hydroxyfunktionellen Polyacrylatharzes und einem aliphatischen Polyisocyanat in einer Schichtdicke von 40-60 μm appliziert. Die Trocknung der Klarlackschicht erfolgt bei Raumtemperatur (mindestens 16 Stunden bei 25°C) oder bei forcierter Trocknung über 40 min. bei 60°C.

Im Falle des Basislackbeispiels 5 wird eine transparente Deckschicht auf der Basis eines OH-funktionellen Polyacrylatharzes und eines n-Butanolveretherten Melaminharzes in einer Schichtdicke von 40-60 μm appliziert. Nach eine Ablüftzeit von 5-10 min. wird 30 min. bei 130°C eingebrannt.

Die erhaltenen Überzüge haben einen hervorragenden Glanz, gute mechanische Eigenschaften sowie eine hohe Witterungsbeständigkeit. Die Basislackbeispiele Nr. 1, 2, 4 und 5 weisen eine ausgezeichnete Anlöseresistenz und Metallic-Effekt auf.

**Patentansprüche**

1. Überzugsmittel, geeignet zur Erzeugung einer Basisschicht bei der Herstellung von Mehrschichtüberzügen, enthaltend ein oder mehrere hydroxylgruppenhaltige (Meth)acryl-Copolymerisate, sowie ein oder mehrere Lösemittel und gegebenenfalls Wasser, Effektpigmente und/oder farbgebende Pigmente, Füllstoffe, und/oder lackübliche Additive,

   **dadurch gekennzeichnet,**

   daß das (Meth)acryl-Copolymerisat im wesentlichen aus Einheiten auf der Basis folgender Monomeren aufgebaut ist:

a) 0.5 - 10.0 Gew.-% Amiden und/oder N-substituierten Amiden der Acrylsäure und/ oder Methacrylsäure,

b) 5.0 - 30.0 Gew.-% Phenylalkylestern der Acrylsäure und/oder Methacrylsäure

c) 10.0 - 30.0 Gew.-% Hydroxyalkylestern der Acrylsäure und/oder Methacrylsäure mit 2-8 C-Atomen im Hydroxyalkylrest,

d) 0.6 - 7.5 Gew.-% Acrylsäure und/oder Methyacrylsäure, und

e) 30.0 - 83.9 Gew.-% Alkylestern der Acrylsäure und/oder Methacrylsäure mit 1-18 C-Atomen im Alkylrest,

wobei die Summe der Komponenten a) bis e) jeweils 100 beträgt.

2. Überzugsmittel nach Anspruch 1, dadurch gekennzeichnet, daß das (Meth)acryl-Copolymerisat eine Hydroxylzahl von 50 bis 120 mg KOH/g, eine Säurezahl von 5 bis 50 mg KOH/g, ein Gewichtsmittel von 5 000 bis 30 000 und eine Glasübergangstemperatur von -10°C bis +80°C aufweist.

3. Überzugsmittel nach einem der Ansprüche 1 bis 2, dadurch gekennzeichnet, daß es niedrigviskoses Celluloseacetobutyrat enthält.

4. Überzugsmittel nach einem der vorhergehenden Ansprüche, dadurch gekennzeichnet, daß es keinen Zusatz an Vernetzungsmittel enthält.

5. Überzugsmittel nach einem der Ansprüche 1 bis 3, dadurch gekennzeichnet, daß es zusätzlich ein oder mehrere Vernetzungsmittel enthält.

6. Überzugsmittel nach Anspruch 5, dadurch gekennzeichnet, daß es als Vernetzungsmittel ein oder mehrere freie oder blockierte Polyisocyanate und/oder Prepolyisocyanate enthält.

7. Überzugsmittel nach Anspruch 5, dadurch gekennzeichnet, daß es ein oder mehrere Aminoplastharze als Vernetzungsmittel enthält.

8. Überzugsmittel nach einem der Ansprüche 1 bis 7, dadurch gekennzeichnet, daß es als Effektpigmente Metall-Schuppenpigmente und/oder Perlglanzpigmente sowie gegebenenfalls Füllstoffe enthält.

9. Überzugsmittel nach einem der Ansprüche 1 bis 8, dadurch gekennzeichnet, daß es Metall-Schuppenpigmente und farbgebende Pigmente sowie gegebenenfalls Füllstoffe enthält.

10. Überzugsmittel nach einem der Ansprüche 1 bis 7, dadurch gekennzeichnet, daß es farbgebende Pigmente und gegebenenfalls Füllstoffe enthält.

11. Verfahren zur Herstellung einer Mehrschichtlackierung durch Auftrag einer Basislackschicht auf ein gegebenenfalls mit einer Grundierung und gegebenenfalls einer oder mehreren weiteren Zwischenschichten versehenes Substrat, und anschließenden Auftrag einer Klar- oder Decklackschicht, dadurch gekennzeichnet, daß zur Herstellung der Basislackschicht ein Überzugsmittel nach einem der Ansprüche 1 bis 10 verwendet wird.

12. Verfahren nach Anspruch 11, dadurch gekennzeichnet, daß zur Herstellung einer Reparaturlackierung, insbesondere auf dem Kraftfahrzeugsektor, ein luft- oder ofentrocknendes Überzugsmittel nach einem der Ansprüche 1 bis 4 und 7 bis 10, das frei von Vernetzungsmitteln ist, verwendet wird.

13. Verwendung der Überzugsmittel nach einem der Ansprüche 1 bis 10 zur Herstellung von Basislackschichten für Mehrschichtlackierungen, insbesondere auf dem Kraftfahrzeugsektor.

14. Verwendung der luft- und ofentrocknenden Überzugsmittel nach einem der Ansprüche 1 bis 4 und 7 bis 10 zur Herstellung von Reparaturlackierungen, insbesondere auf dem Kraftfahrzeugsektor.